Europäisches Patentamt

European Patent Office

Office européen des brevets

(19)

(11) Numéro de publication : **0 345 144 B1**

(12) **FASCICULE DE BREVET EUROPEEN**

(45) Date de publication du fascicule du brevet :
**02.12.92 Bulletin 92/49**

(51) Int. Cl.[5] : **F01P 5/02,** F01P 3/12,
F01N 3/04

(21) Numéro de dépôt : **89401469.5**

(22) Date de dépôt : **30.05.89**

(54) **Système de refroidissement d'un moteur à combustion interne.**

(30) Priorité : **02.06.88 FR 8807347**

(43) Date de publication de la demande :
**06.12.89 Bulletin 89/49**

(45) Mention de la délivrance du brevet :
**02.12.92 Bulletin 92/49**

(84) Etats contractants désignés :
**DE GB IT**

(56) Documents cités :
**DE-A- 1 908 240**
**DE-A- 2 337 479**
**FR-A- 1 396 142**

(56) Documents cités :
**FR-A- 2 215 840**
**GB-A- 1 554 540**
**US-A- 2 046 252**
**US-A- 3 164 140**

(73) Titulaire : **Rognon, Armand**
**18, Rue des Suzières Verneuil-sous-Coucy**
**F-02380 Coucy le Château Auffrique (FR)**

(72) Inventeur : **Rognon, Armand**
**18, Rue des Suzières Verneuil-sous-Coucy**
**F-02380 Coucy le Château Auffrique (FR)**

(74) Mandataire : **Bloch, Gérard et al**
**2, square de l'Avenue du Bois**
**F-75116 Paris (FR)**

EP 0 345 144 B1

**Description**

La présente invention a pour objet un système de refroidissement pour moteur à combustion interne comprenant au moins des premiers moyens pour faire circuler de l'air selon un trajet entourant directement les cylindres dudit moteur.

L'invention s'applique notamment aux moteurs diesel dont les cylindres sont refroidis par air, car, si les cylindres sont directement entourés par le trajet de l'air, c'est qu'il n'est pas prévu, autour de ces derniers, de circulation d'eau destinée à les refroidir. Un tel dispositif est décrit dans le US-A-3 164 140, dans lequel l'air de refroidissement des cylindres refroidit également directement le collecteur d'échappement.

Dans de tels moteurs, les gaz en sortie des cylindres sont à une température relativement élevée. Il en résulte que la température des parois du collecteur d'échappement, ainsi que celle des gaz en sortie de ce collecteur d'échappement, sont trop élevées pour permettre, sans risque d'explosion, l'utilisation de tels moteurs en atmosphère comburante, comme par exemple sur les plate-formes de forage pétrolier, ou encore dans les locaux où sont fabriqués des matières pulvérulentes inflammables ou explosives, ou encore certains produits chimiques.

La présente invention vise à pallier cet inconvénient, en procurant un moteur dont les cylindres sont refroidis par air, et susceptible d'être utilisé sans danger en atmosphère comburante.

A cet effet, elle a pour objet un moteur du type défini ci-dessus, caractérisé par le fait qu'il comprend un radiateur, disposé sur ledit trajet, dans lequel circule un premier liquide de refroidissement du collecteur d'échappement dudit moteur.

Dans le moteur de l'invention, le collecteur d'échappement est refroidi par un liquide, par exemple de l'eau, elle-même circulant dans un radiateur afin d'échanger avec l'extérieur les calories dont elle s'est chargée en refroidissant le collecteur d'échappement. Toutefois, et de façon remarquable, dans le moteur de l'invention, il n'est pas nécessaire de prévoir un ventilateur supplémentaire de refroidissement de ce radiateur, car son refroidissement est assuré par l'air de refroidissement des cylindres.

Avantageusement, lesdits premiers moyens sont disposés en aval des cylindres sur ledit trajet pour aspirer ledit air, et ledit radiateur est disposé entre lesdits cylindres et lesdits premiers moyens pour faire circuler ledit air.

Alors le mouvement d'air, crée par une dépression, est plus régulier et efficace que lorsqu'il est crée par une surpression.

Avantageusement encore, il est prévu des deuxièmes moyens pour faire circuler ledit air, disposés en amont des cylindres sur ledit trajet pour souffler ledit air.

La température des gaz d'échappement se trouve encore abaissée, du fait que l'action des deuxièmes moyens vient renforcer celle des premiers moyens.

Avantageusement encore, ledit premier liquide de refroidissement circule dans une chemise entourant ledit collecteur d'échappement.

Avantageusement encore, il est prévu, autour de ladite première chemise, une deuxième chemise contenant un deuxième liquide de refroidissement.

La présente invention sera mieux comprise grâce à la description suivante de la forme de réalisation préférée du moteur de l'invention et d'une de ses variantes, faite en se référant aux dessins annexés, sur lesquels :

- la fig. 1 est une vue de face du moteur de l'invention,
- la fig. 2 est une vue de dessus, partiellement écorchée, du moteur de la fig. 1,
- la fig. 3 est une vue de gauche, partiellement écorchée, du moteur de la fig. 1,
- la fig. 4 est une vue de dessus, partiellement écorchée, d'une variante du moteur de la fig. 1, et,
- la fig. 5 est une vue de gauche, partiellement écorchée, du moteur de la fig. 4.

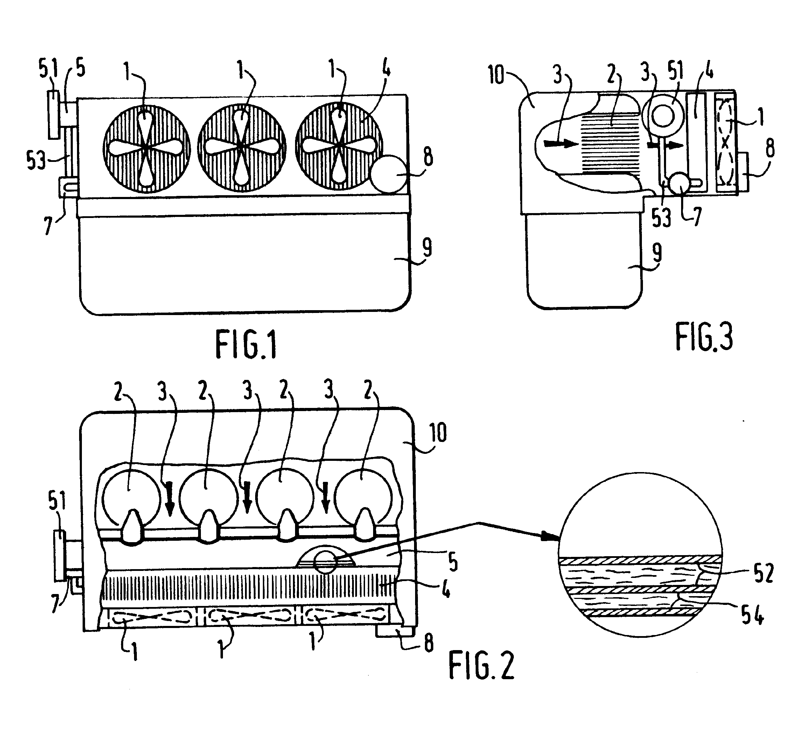

En se référant aux figures 1, 2 et 3, un moteur à combustion interne comprend un bloc moteur 9, surmonté ici d'une rangée de cylindres 2.

Un collecteur d'échappement 5 est disposé parallèlement à la ligne des cylindres 2, pour collecter les gaz en sortie de ceux-ci. Le collecteur d'échappement 5 est destiné à être raccordé, par une bride 51, à un système d'échappement non représenté car connu.

Le collecteur d'échappement 5 est entouré par une première chemise 52 à l'intérieur de laquelle circule un premier liquide de refroidissement, comme par exemple de l'eau. A cet effet la chemise 52 est raccordée à un radiateur 4 par deux tubulures dont l'une 53 est visible sur les dessins. Sur la tubulure 53 est montée une pompe à eau 7, entraînée de façon non représentée car connue, pour faire circuler l'eau entre le radiateur 4 et la chemise 52 du collecteur d'échappement 5.

La première chemise 52 est ici entourée d'une deuxième chemise 54 contenant un deuxième liquide de refroidissement inerte, comme par exemple, du fluor inerte.

Le radiateur 4 est ici à circulation d'eau horizontale, et il est de forme sensiblement rectangulaire, de largeur sensiblement égale à la hauteur des cylindres 2, et de longueur sensiblement égale à celle de la rangée de cylindres 2. Il est disposé pour que sa longueur soit sensiblement parallèle à la rangée de cylindres 2, et il fait face à cette rangée.

Des ventilateurs 1, ici au nombre de 3, de diamètre sensiblement égal à la hauteur des cylindres, et alignés sur une droite sensiblement parallèle à la rangée de cylindres 2, sont disposés pour faire face au radiateur 4, du côté de celui-ci opposé au côté où se trouve la rangée de cylindres 2.

Les ventilateurs 1 sont entraînés de façon non représentée car connue, par l'intermédiaire de courroies reliées à un moteur hydraulique 8, entraîné lui-même par le moteur à combustion interne de façon non représentée car connue.

Un carénage 10, dans lequel sont ménagées des prises d'air, coiffe les éléments qui viennent d'être décrits de façon à assurer une circulation d'air optimale.

Le moteur qui vient d'être décrit est refroidi de la façon suivante. Le moteur hydraulique 8 entraîne les ventilateurs 1 pour que ceux-ci fassent circuler de l'air selon un trajet représenté sur les dessins par les flèches 3, trajet orienté depuis les cylindres 2 vers les ventilateurs 1. On peut donc dire que les ventilateurs 1, disposés en aval des cylindres 2 sur le trajet 3, aspirent l'air de refroidissement. On peut dire également que le trajet 3 de l'air de refroidissement entoure directement chacun des cylindres 2, car il n'est pas prévu de circulation d'eau autour de ceux-ci.

Comme le radiateur 4 est disposé entre la rangée de cylindres 2 et les ventilateurs 1, et donc sur le trajet 3, il est également refroidi par l'air de refroidissement aspiré par les ventilateurs 1.

L'eau refroidie dans le radiateur 4 grâce à l'air de refroidissement circule dans la chemise 52 sous l'action de la pompe à eau 7, afin de refroidir le collecteur d'échappement 5.

L'agencement et le fonctionnement qui viennent d'être décrit permettent, dans un moteur dont les cylindres sont refroidis par air, d'abaisser la température des parois du collecteur d'échappement, ainsi que la température des gaz en sortie de celui-ci.

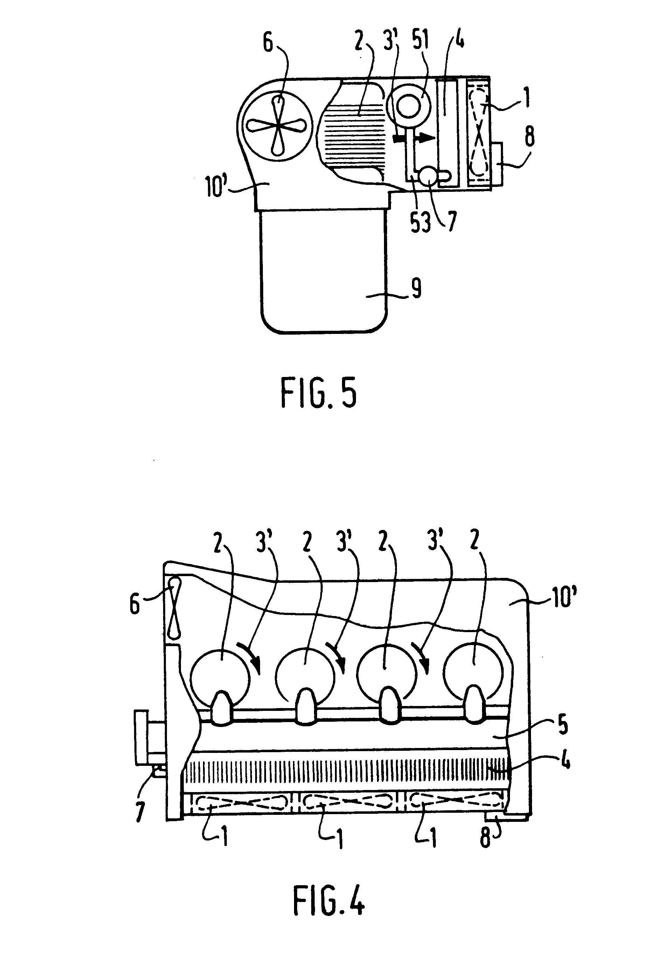

Les figures 4 et 5 montrent une variante de réalisation, dans laquelle il est prévu, en outre, un ventilateur 6, disposé en amont de la rangée de cylindres 2 sur le trajet 3, pour souffler l'air de refroidissement.

Sur les figures 4 et 5, le ventilateur 6 est disposé dans une paroi du carénage 10′ sensiblement perpendiculaire à l'arbre de sortie du moteur, ce qui permet de l'entraîner, de façon non représentée car connue, par l'intermédiaire d'une courroie reliée à l'arbre de sortie.

Le trajet 3′ de l'air de refroidissement est sensiblement le même que le trajet 3, et l'efficacité du refroidissement est encore accrue, du fait que l'action du ventilateur 6, soufflant, vient renforcer l'action des ventilateurs 1, aspirants.

Naturellement, la présente invention n'est pas limitée à la description qui vient d'être faite. Notamment, le nombre des ventilateurs 1 peut être inférieur ou supérieur à 3, selon le nombre et l'agencement des cylindres. De même, il est à la portée d'un homme de métier de modifier notamment les modes d'entraînement des ventilateurs et de circulation de l'eau entre le radiateur et le collecteur d'échappement, et la direction de circulation de l'eau de refroidissement dans le radiateur 4.

De même, il est possible de remplacer le deuxième liquide de refroidissement inerte dans la deuxième chemise 54, par un liquide circulant sous l'action d'une pompe.

## Revendications

1. Système de refroidissement d'un moteur à combustion interne comprenant au moins des premiers moyens (1) pour faire circuler de l'air selon un trajet (3) entourant directement les cylindres (2) dudit moteur, caractérisé par le fait qu'il comprend un radiateur (4), disposé sur ledit trajet (3), dans lequel circule un premier liquide de refroidissement du collecteur d'échappement (5) dudit moteur.

2. Système selon la revendication 1, dans lequel lesdits premiers moyens (1) sont disposés en aval des cylindres (2) sur ledit trajet (3), pour aspirer ledit air, et ledit radiateur (4) est disposé entre lesdits cylindres (2) et lesdits premiers moyens (1) pour faire circuler ledit air.

3. Système selon la revendication 2, dans lequel il est prévu des deuxièmes moyens (6) pour faire circuler ledit air, disposés en amont des cylindres (2) sur ledit trajet (3) pour souffler ledit air.

4. Système selon l'une des revendications 1 à 4, dans lequel ledit premier liquide de refroidissement circule dans une première chemise (52) entourant ledit collecteur d'échappement (5).

5. Système selon la revendication 4, dans lequel il est prévu, autour de ladite première chemise (52), une deuxième chemise (54) contenant un deuxième liquide de refroidissement.

6. Système selon l'une des revendications 1 à 5, dans lequel ledit radiateur (4) est à circulation horizontale.

7. Système selon l'une des revendications 1 à 6, dans lequel il est prévu une pompe (7) pour faire circuler ledit premier liquide de refroidissement entre ledit radiateur (4) et ledit collecteur d'échappement (5).

8. Système selon l'une des revendications 1 à 7, dans lequel il est prévu un moteur hydraulique (8) pour entraîner lesdits premiers moyens (1) pour faire circuler ledit air.

**Patentansprüche**

1. Kühlsystem eines Brennkraftmotors, das mindestens erste Mittel (1) beinhaltet, um einen Luftstrom entlang einer Wegstrecke (3) zu erzeugen, die direkt um die Zylinder (2) des Motors führt, dadurch gekennzeichnet, daß es einen auf dieser Strecke (3) angeordneten Kühler (4) umfaßt, in dem eine erste Flüssigkeit zur Kühlung der Abgassammelleitung (5) zirkuliert.

2. System nach Anspruch 1, bei dem diese ersten Mittel (1) stromabwärts der Zylinder (2) auf der Strecke (3) angeordnet sind, um die Luft anzusaugen, und der Kühler (4) zwischen den Zylindern (2) und den ersten Mitteln (1), die der Erzeugung des Luftstromes dienen, angeordnet ist.

3. System nach Anspruch 2, bei dem zweite Mittel (6) vorgesehen sind, um den genannten Luftstrom zu erzeugen, die stromaufwärts der Zylinder (2) auf der Strecke (3) angeordnet sind, um die Luft zu blasen.

4. System nach einem der Ansprüche 1 bis 3, bei dem die erste Kühlflüssigkeit einen ersten Mantel (52) durchströmt, der die Abgassammelleitung (5) umgibt.

5. System nach Anspruch 4, bei dem um den ersten Mantel (52) ein zweiter Mantel (54) vorgesehen ist, der eine zweite Kühlflüssigkeit enthält.

6. System nach einem der Ansprüche 1 bis 5, bei dem der Kühler (4) in horizontaler Richtung durchströmt wird.

7. System nach einem der Ansprüche 1 bis 6, bei dem eine Pumpe (7) vorgesehen ist, um die erste Kühlflüssigkeit zwischen dem Kühler (4) und der Abgassammelleitung (5) in Umlauf zu versetzen.

8. System nach einem der Ansprüche 1 bis 7, bei dem ein Hydromotor (8) vorgesehen ist, um die ersten Mittel (1), die der Erzeugung des Luftstromes dienen, anzutreiben.

**Claims**

1. System for cooling an internal combustion engine, comprising at least
   first means (1) for causing air to flow along a path (3) directly surrounding the cylinders (2) of said engine, characterized in that it comprises a radiator (4), disposed in that path (3), in which flows a first liquid cooling the exhaust manifold (5) of said motor.

2. System as claimed in claim 1, wherein :
   said first means (1) are disposed downstream of the cylinders (2) in said path for drawing in said air, and said radiator (4) is disposed between said cylinders (2) and said first means (1) for causing said air to flow.

3. System as claimed in claim 2, wherein :
   second means (6) are provided for further enabling said air to flow, disposed upstream of the cylinders (2) in said path for blowing said air.

4. System as claimed in one of claims 1 to 3, wherein said first cooling liquid flows within a first jacket (52) surrounding said exhaust manifold (5).

5. System as claimed in claim 4 wherein
   a second jacket (54) is provided around said first jacket (52) containing a second cooling liquid.

6. System as claimed in one of claims 1 to 5, wherein :
   said radiator is of a horizontal flow type.

7. System as claimed in one of claims 1 to 6, wherein a pump (7) is provided for causing said first cooling liquid to flow between said radiator (4) and said exhaust manifold (5).

8. System as claimed in one of claims 1 to 7, wherein :
   a hydraulic motor (8) is provided for driving said first means (1) for causing said air to flow.

FIG.1

FIG.3

FIG.2

EP 0 345 144 B1

FIG. 5

FIG.4